# EUROPEAN PATENT APPLICATION

(11) **EP 4 773 384 A1**
(43) Date of publication of application: **08.07.2026**
(21) Application number: 24895458.8
(22) Date of filing: 22.05.2024
(51) Int. Cl.: H01M 50/342, H01M 50/103

(54) **BATTERY CELL, BATTERY, AND ELECTRIC DEVICE**

(30) Priority: 30.11.2023 CN 202311641676
(71) Applicant: Contemporary Amperex Technology Co., Limited, Ningde, Fujian 352100 (CN)
(72) Inventor: WANG, Liqin, Ningde, Fujian 352100 (CN)
(74) Representative: Kraus & Lederer PartGmbB
(86) International application number: PCT/CN2024/094615
(87) International publication number: WO 2025/112348

(57) **Abstract**

The present application relates to the technical field of batteries. Disclosed in the present application are a battery cell, a battery, and an electric device. The battery cell comprises a shell and a pressure relief notch, wherein the shell comprises a first wall; and the pressure relief notch is arranged in the first wall and comprises an arc section and a first extension section, the arc section having a first end, and the first extension section being connected to the first end and extending from the first end in the direction approaching the central axis of the arc section. In the battery cell according to the embodiments of the present application, the tearing range and tearing direction of a torn part on the shell can be controlled, and partial valve opening can be achieved after thermal runaway of the battery cell and tearing of the pressure relief notch, thereby reducing the probability of tearing over a large area of the shell and reducing the damage to the battery cell caused by uncontrollable cracks.

## Description

### CROSS-REFERENCE TO RELATED APPLICATION

The present application claims priority to Chinese Patent Application No. 2023116416764 filed on November 30, 2023 and entitled "BATTERY CELL, BATTERY, AND ELECTRIC DEVICE", the content of which is incorporated herein by reference in its entirety.

### TECHNICAL FIELD

The present application relates to the technical field of batteries, and in particular, to a battery cell, a battery, and an electric device.

### BACKGROUND

Energy conservation and emission reduction are the key to sustainable development of the automobile industry. Electric vehicles have become an important part of the sustainable development of the automobile industry due to their energy-saving and environmental protection advantages. For the electric vehicles, the battery technology is an important factor in their development.

Batteries are extensively applied in fields such as portable electronic devices, electric vehicles, electric tools, unmanned aerial vehicles, and energy storage devices. During the use of the battery, reliability is a problem that cannot be overlooked. Therefore, how to improve the reliability of batteries is an urgent technical problem to be solved in battery technologies.

### SUMMARY

The present application provides a battery cell, a battery, and an electric device, which can reduce the extent of damage to a shell during thermal runaway of the battery cell, and reduce the impact on other battery cells, thereby improving the reliability of the battery.

The present application is implemented through the following technical solutions:
In a first aspect, embodiments of the present application provide a battery cell. The battery cell includes a shell and a pressure relief score. The shell includes a first wall; the pressure relief score is disposed on the first wall, the pressure relief score includes a circular arc segment and a first extension segment. The circular arc segment is provided with a first end, and the first extension segment is connected to the first end and extends from the first end toward a direction close to a central axis of the circular arc segment.

In the battery cell according to the embodiments of the present application, the pressure relief score includes a circular arc segment and a first extension segment. By extending the first extension segment from the first end toward the direction close to the central axis of the circular arc segment, the circular arc segment can reduce the stress concentration of the pressure relief score during processing. When thermal runaway occurs in the battery cell and the internal high-pressure gas tears the pressure relief score, the first extension segment can guide the crack to approach the direction close to the central axis of the circular arc segment, thereby enabling the size of the torn portion on the shell to be controllable. Certainly, the first extension segment also enables the tearing direction of the crack to be controllable. Therefore, after thermal runaway occurs in the battery cell and the pressure relief score is torn, localized venting can be achieved to reduce the probability of large-scale tearing of the shell, and both the tearing direction and the tearing range of the crack are controllable, thereby reducing the damage to the battery cell caused by uncontrollable cracks.

According to some embodiments of the present application, the pressure relief score further includes a second extension segment, the circular arc segment is provided with a second end, and the second extension segment is connected to the second end and extends from the second end toward the direction close to the central axis. In the above solution, the second extension segment can guide the crack to approach the direction close to the central axis of the circular arc segment, and the second extension segment and the first extension segment can enable the crack to exhibit a converging trend, thereby enabling the tearing direction and the tearing range of the crack to be controllable, and achieving localized venting of the shell.

According to some embodiments of the present application, the first extension segment and the second extension segment are symmetrical about the central axis. In the above solution, the extension length of the first extension segment is the same as the extension length of the second extension segment. If both the first extension segment and the second extension segment are straight lines, the angle between the extension line of the first extension segment and the central axis is the same as the angle between the extension line of the second extension segment and the central axis. Therefore, the tearing direction and the tearing range of the crack guided by the first extension segment and the second extension segment can remain substantially consistent, thereby reducing the probability of uncontrollable cracks and further achieving stable localized venting of the shell.

According to some embodiments of the present application, a length of the first extension segment is the same as a length of the second extension segment. In the above solution, the venting area of the crack at the first extension segment is approximately the same as the venting area of the crack at the second extension segment, and the subsequent venting area of the shell after the crack is guided by the first extension segment is also approximately the same as the subsequent venting area of the shell after the crack is guided by the second extension segment, thereby ensuring the stability of the tearing range of the crack and reducing the probability of uncontrollable cracks.

According to some embodiments of the present application, both the first extension segment and the second extension segment are straight line segments, and an included angle between an extension line of the first extension segment and the central axis is the same as an included angle between an extension line of the second extension segment and the central axis. In the above solution, the crack guided by the first extension segment and the crack guided by the second extension segment may intersect on the central axis, thereby achieving localized venting of the shell.

According to some embodiments of the present application, the length of the first extension segment is less than the length of the second extension segment. In the above solution, the subsequent venting area of the shell after the crack is guided by the first extension segment is larger than the subsequent venting area of the shell after the crack is guided by the second extension segment, such that the high-pressure gas inside the shell can be quickly discharged after thermal runaway occurs in the battery cell.

According to some embodiments of the present application, both the first extension segment and the second extension segment are straight line segments, and the included angle between the extension line of the first extension segment and the central axis is different from the included angle between the extension line of the second extension segment and the central axis. In the above solution, the subsequent venting area of the shell after the crack is guided by the first extension segment is different from the subsequent venting area of the shell after the crack is guided by the second extension segment, such that the high-pressure gas inside the shell can be quickly discharged through the larger venting region on the shell after thermal runaway occurs in the battery cell.

According to some embodiments of the present application, a central angle of the circular arc segment is α, satisfying 180° ≤ α < 360°. In the above solution, when α ≥ 180°, the area enclosed by the circular arc segment is sufficient, such that when thermal runaway occurs in the battery cell, the crack tears the shell along the circular arc segment, and the crack on the circular arc segment allows the high-pressure gas inside the shell to be rapidly released; when α < 360°, the pressure relief score is of an unclosed annular structure, and the pressure relief score is provided with an opening, such that the crack can tear the shell along the orientation of the opening, enabling the tearing direction and the tearing range of the crack to be controllable, thereby achieving localized venting of the crack on the shell. When 180° ≤ α < 360°, the crack torn along the circular arc segment can cover a sufficient range, allowing the high-pressure gas inside the shell to be rapidly released. Meanwhile, the pressure relief score is provided with an opening, such that the tearing direction and the tearing range of the crack can be guided, thereby achieving localized venting of the crack on the shell.

According to some embodiments of the present application, 210° ≤ α ≤ 330°. In the above solution, when α ≥ 210°, the area enclosed by the circular arc segment is further increased, such that when thermal runaway occurs in the battery cell, the crack tears the shell along the circular arc segment, and the tearing range of the crack enables the high-pressure gas inside the shell to be discharged more quickly; when α ≤ 330°, the pressure relief score is of an unclosed annular structure, and the pressure relief score is provided with an opening having a larger opening range, such that the crack can tear the shell along the orientation of the opening. This not only makes the tearing direction and the tearing range of the crack controllable, but also increases the tearing range of the crack, thereby enabling faster discharge of the high-pressure gas inside the shell. When 210° ≤ α ≤ 330°, the discharge speed of the high-pressure gas inside the shell can be further increased. Meanwhile, the size of the opening on the circular arc segment is larger, thereby guiding the crack to tear the shell over a larger range. Therefore, the opening can not only guide the tearing direction and the tearing range of the crack, but also further increase the discharge speed of the high-pressure gas inside the shell.

According to some embodiments of the present application, the first extension segment is tangent to the circular arc segment; and/or the second extension segment is tangent to the circular arc segment. In the above solution, the crack on the circular arc segment can extend and tear very smoothly along the tangent line at the first end of the circular arc segment, thereby reducing the impediment to the tearing process of the crack, enabling the tearing of the crack to be smoother and more controllable, and reducing the stress concentration during the tearing process; or/and the crack on the circular arc segment can extend and tear very smoothly along the tangent line at the second end of the circular arc segment, thereby reducing the impediment to the tearing process of the crack, enabling the tearing of the crack to be smoother and more controllable, and reducing the stress concentration during the tearing process.

According to some embodiments of the present application, the first extension segment is a straight line segment; and/or the second extension segment is a straight line segment. In the above solution, in one aspect, the processing of the first extension segment can be easier, and in another aspect, the tearing process of the crack on the straight line segment is allowed to be smoother; in other words, the straight line segment can better guide the crack to tear along a preset direction, thereby enabling the tearing direction and the tearing range of the crack to be more controllable; and/or in one aspect, the processing of the second extension segment can be easier, and in another aspect, the tearing process of the crack on the straight line segment is allowed to be smoother; in other words, the straight line segment can better guide the crack to tear along a preset direction, thereby enabling the tearing direction and the tearing range of the crack to be more controllable.

According to some embodiments of the present application, a radius of the circular arc segment is R, satisfying 1 mm ≤ R ≤ 20 mm; and a length of the straight line segment is L1, satisfying 0 < L1 ≤ 20 mm. In the above solution, in one aspect, it can not only meet the pressure relief requirement of the battery cell during thermal runaway, but also make the range of the pressure relief score not too large to affect the overall structural strength of the shell.

According to some embodiments of the present application, 3 mm ≤ R ≤ 10 mm, and 1 mm ≤ L1 ≤ 10 mm. In the above solution, it can not only further meet the pressure relief requirement of the battery cell during thermal runaway, but also make the range of the pressure relief score not too large, such that the overall structural strength of the shell is further guaranteed.

According to some embodiments of the present application, 0 < L1/R ≤ 2 is satisfied. In the above solution, it can not only ensure that the straight line segment has a sufficient length to guide the tearing direction and the tearing range of the crack, but also mitigate the excessive negative impact on the structural strength of the shell caused by an excessive range of the pressure relief score resulting from the overextension of the straight line segment.

According to some embodiments of the present application, 0.1 ≤ L1/R ≤ 1 is satisfied. In the above solution, it can not only ensure that the straight line segment has a sufficient length to guide the tearing direction and the tearing range of the crack, but also further mitigate the excessive negative impact on the structural strength of the shell caused by an excessive range of the pressure relief score resulting from the overextension of the straight line segment.

According to some embodiments of the present application, an end of the first extension segment distal to the circular arc segment is spaced apart from an end of the second extension segment distal to the circular arc segment to form an opening. In the above solution, the high-pressure gas tears the pressure relief score after thermal runaway of the battery cell, and the crack can tear along the opening toward the corner, such that the orientation of the opening can be adjusted to adjust the tearing direction of the crack.

According to some embodiments of the present application, the shell is flat, and the first wall is a wall of the shell in a thickness direction. In the above solution, the pressure relief score is not disposed on a small surface, but instead on a large surface of the shell. Thus, the pressure relief score is not constrained by the size of the small surface, and the pressure relief score can be designed with an appropriate size as required. In addition, disposing the pressure relief score on the large surface can further reduce the processing difficulty of the pressure relief score, such that the manufacturing cost of the pressure relief score is reduced.

According to some embodiments of the present application, the pressure relief score is disposed in a corner region of the first wall and the opening faces toward a corner of the first wall. In the above solution, by disposing the pressure relief score in the corner region of the first wall, when thermal runaway occurs in the battery cell, the crack can tear the shell under the guidance of the pressure relief score. Since the pressure relief score is disposed in the corner region of the first wall, the tearing region of the crack is also mainly concentrated in the corner region of the first wall. Thus, the probability of crack-induced damage to other regions of the first wall can be reduced, thereby making it possible to recycle the shell after thermal runaway occurs in the battery cell.

When the crack tears the shell along the pressure relief score, the crack can tear along the orientation of the opening, and the tearing direction of the crack faces toward the corner of the first wall, thereby reducing the probability of the crack moving toward the middle region of the first wall, and reducing the probability of complete tearing of the first wall, such that the shell can be recycled.

According to some embodiments of the present application, the first wall includes a first edge and a second edge, and the first edge and the second edge intersect to form one corner of the first wall; a shortest distance between a center of the pressure relief score and the first edge is L2, and a length of the second edge is L, satisfying 0 < L2 < L/2; and a shortest distance between the center of the pressure relief score and the second edge is W1, and a length of the first edge is W, satisfying 0 < W1 < W/2.

In the above solution, the center of the pressure relief score is proximal to the corner defined by the first edge and the second edge. Thus, the tearing region of the crack is also mainly concentrated in the corner region of the first wall, such that the probability of crack-induced damage to other regions of the first wall can be reduced, thereby making it possible to recycle the shell after thermal runaway occurs in the battery cell.

According to some embodiments of the present application, a shortest distance between the end of the first extension segment distal to the circular arc segment and the first edge is L3, and the length of the second edge is L, satisfying 0 < L3 < L/2; and a shortest distance between the end of the second extension segment distal to the circular arc segment and the second edge is W2, and the length of the first edge is W, satisfying 0 < W2 < W/2.

In the above solution, since the shortest distance between the end of the second extension segment distal to the circular arc segment and the second edge and the length of the first edge meet the above conditions, the opening faces toward the corner defined by the first edge and the second edge. When the crack tears the shell along the pressure relief score, the crack can tear along the orientation of the opening, that is, the tearing direction of the crack faces toward the corner of the first wall, thereby reducing the probability of the crack moving toward the middle region of the first wall, and reducing the probability of complete tearing of the first wall, such that the shell can be recycled.

According to some embodiments of the present application, the pressure relief score is disposed in a central region of the first wall. In the above solution, the pressure relief score is disposed in the central region of the first wall. Meanwhile, since the pressure relief score is provided with the opening, when thermal runaway occurs in the battery cell, the crack extends along the pressure relief score and along the region toward which the opening is oriented. Thus, the crack does not tear irregularly and does not damage most of the region of the first wall, but instead can be guided to a preset region.

According to some embodiments of the present application, a wall thickness of the first wall is T, satisfying 0.03 mm ≤ T ≤ 0.6 mm. In the above solution, in one aspect, it can not only ensure that the thickness of the first wall is thin enough to improve the energy density of the battery cell in the thickness direction of the first wall, but also enable the first wall to have sufficient structural strength to facilitate subsequent laser etching of the pressure relief score thereon.

According to some embodiments of the present application, T satisfies 0.05 mm ≤ T ≤ 0.2 mm. In the above solution, in one aspect, it can not only ensure that the thickness of the first wall is thin enough to further improve the energy density of the battery cell in the thickness direction of the first wall, but also further ensure the structural strength of the first wall to facilitate subsequent laser etching of the pressure relief score thereon.

According to some embodiments of the present application, the shell includes a shell body and a cover plate. The shell body includes a bottom wall and a peripheral side wall. One end of the peripheral side wall is connected to an outer peripheral edge of the bottom wall, the other end of the peripheral side wall forms a first opening in an enclosing manner, and the cover plate closes the first opening. The first wall is the cover plate or the bottom wall.

In the above solution, the shell is formed by two separate components, i.e., the shell body and the cover plate. The shell body and the cover plate may be metal pieces, and the two may be fixed together by welding. The first wall is the cover plate or the bottom wall, so the pressure relief score is disposed on the cover plate or the bottom wall. For example, if the battery cell is flat, and the cover plate and the bottom wall are opposite to each other in the thickness direction, the pressure relief score is disposed on the large surface of the shell.

In a second aspect, the embodiments of the present application provide a battery. The battery includes the above battery cell. In the above solution, since the battery according to the embodiments of the present application is provided with the above battery cell, the pressure relief score can be torn during thermal runaway of the battery cell, and the size and tearing direction of the torn part on the shell are controllable, thereby achieving localized venting and reducing the probability of large-scale tearing of the shell.

In a third aspect, the embodiments of the present application provide an electric device. The electric device includes the above battery cell or the above battery. The battery cell or the battery is configured to provide electric energy. In the above solution, since the electric device according to the embodiments of the present application is provided with the above battery cell or battery, the safety of the electric device is improved.

The additional aspects and the advantages of the present application will be partially provided in the following description, will partially become apparent from the following description, or will be learned through the practice of the present application.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic diagram of a vehicle according to an embodiment of the present application;
FIG. 2 is an exploded view of a battery according to an embodiment of the present application;
FIG. 3 is an exploded view of a battery cell according to an embodiment of the present application;
FIG. 4 is a schematic diagram of a first wall according to an embodiment of the present application;
FIG. 5 is a partially enlarged schematic diagram of circled portion A in FIG. 4;
FIG. 6 is a schematic diagram of another first wall according to an embodiment of the present application;
FIG. 7 is a partial cross-sectional view of a first wall according to an embodiment of the present application;
FIG. 8 is a schematic diagram of yet another first wall according to an embodiment of the present application; and
FIG. 9 is a schematic diagram of yet another first wall according to an embodiment of the present application.

Reference numerals: vehicle 1000; battery 100; controller 200; motor 300; case 10; battery cell 20; first sub-case 11; second sub-case 12; shell 21; electrode assembly 22; electrode terminal 25; shell body 211; bottom wall 211a; peripheral side wall 211b; cover plate 212; first wall 212a; pressure relief score 201; circular arc segment 201a; first extension segment 201b; second extension segment 201c; central axis 202; opening 203; first edge 204; second edge 205.

### DETAILED DESCRIPTION

To make the objectives, technical solutions, and advantages of embodiments of the present application clearer, the technical solutions in the embodiments of the present application will be clearly and comprehensively described hereinafter with reference to the drawings in the embodiments of the present application. It is apparent that the described embodiments are some, but not all, embodiments of the present application. Based on the embodiments in the present application, all other embodiments obtained by those of ordinary skill in the art without making creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the described embodiments of the present application can be combined with other embodiments.

In the description of the present application, it should be noted that unless otherwise explicitly specified or limited, the terms "mount", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

The term "plurality of" used in the present application refers to two or more (including two). Similarly, "plurality of groups" refers to two or more (including two) groups, and "plurality of pieces" refers to two or more (including two) pieces.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle; alternatively, a part of the case may become at least a part of a crossmember and a longitudinal member of the vehicle.

In some embodiments, the battery may be an energy storage device. The energy storage device includes an energy storage container, an energy storage electrical cabinet, and the like.

In the embodiments of the present application, the battery cell may be a secondary battery. The secondary battery refers to a battery cell that can be reused by activating the active material through charging after the battery cell is discharged.

The battery cell may, but is not limited to, be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in a thickness direction thereof, and the positive electrode active material is disposed on either or both of the two opposite surfaces of the positive electrode current collector.

As an example, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used.

In some embodiments, the negative electrode may be a negative electrode plate, and the negative electrode plate may include a negative electrode current collector.

As an example, a metal foil or a composite current collector may be used as the negative electrode current collector. For example, for the metal foil, aluminum treated with silver on the surface, stainless steel treated with silver on the surface, stainless steel, copper, aluminum, nickel, carbon electrode, carbon, nickel, titanium, or the like may be used.

In some embodiments, the negative electrode current collector is provided with two surfaces opposite to each other in a thickness direction thereof, and the negative electrode active material is disposed on either or both of the two opposite surfaces of the negative electrode current collector.

As an example, a negative electrode active material known in the art for use in batteries may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic. The separation film may be a single-layer film or a multi-layer composite film, and there is no particular limitation on this. When the separation film is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell further includes an electrolyte that serves to conduct ions between the positive electrode and the negative electrode. The electrolyte may be liquid-state, gel-state, or solid-state. The liquid-state electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

In some embodiments, the electrode assembly is of a stacked structure.

In some embodiments, the battery cell may include a shell. The shell is configured to encapsulate components such as electrode assemblies and electrolytes. The shell may be a steel shell, an aluminum shell, a plastic shell (such as polypropylene), a composite metal shell (such as a copper-aluminum composite shell), an aluminum-plastic film, or the like.

In some embodiments, the shell includes an end cover and a shell body. The shell body is provided with an opening, and the end cover closes the opening to form a confined space for accommodating the electrode assembly, the electrolyte, and other substances. The shell body may be provided with one or more openings. There may also be one or more end covers.

In some embodiments, at least one electrode terminal is disposed on the shell body, and the electrode terminal is electrically connected to the tabs of the electrode assembly. The electrode terminal may be directly connected to the tabs or may be indirectly connected to the tabs through an adapter member. The electrode terminal may be disposed on the end cover, and it may also be disposed on the shell body.

In some embodiments, the shell is provided with an anti-explosion valve. The anti-explosion valve is configured to discharge the internal pressure of the battery cell.

As an example, the battery cell may be a cylindrical battery cell, a prismatic battery cell, a pouch battery cell, or a battery cell of other shapes. The prismatic battery cell includes a square-shell battery cell, a blade-shaped battery cell, and a polygonal prismatic battery, and the polygonal prismatic battery is, for example, a hexagonal prismatic battery. This is not particularly limited in the embodiments of the present application.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle; alternatively, a part of the case may become at least a part of a crossmember and a longitudinal member of the vehicle.

In some embodiments, the battery may be an energy storage device. The energy storage device includes an energy storage container, an energy storage electrical cabinet, and the like.

Batteries, with outstanding advantages such as high energy density, low environmental pollution, high power density, long service life, wide adaptability, and low self-discharge coefficient, are an important part of new energy development nowadays.

Battery technology advancement requires consideration of various design factors at the same time, for example, energy density, discharge capacity, charging and discharging rate, and other performance parameters. In addition, the assembly efficiency of the battery also needs to be considered.

The battery cell disclosed in the embodiments of the present application can be used in, but is not limited to be used in, electric devices such as vehicles, ships, or aircraft. The power system of the electric device may be composed of the battery cell, the battery, and the like disclosed in the present application.

The embodiments of the present application provide an electric device using a battery cell as a power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, and spaceships.

In the following embodiments, for ease of description, the present application is illustrated by taking a vehicle 1000 as an example of the electric device according to an embodiment of the present application.

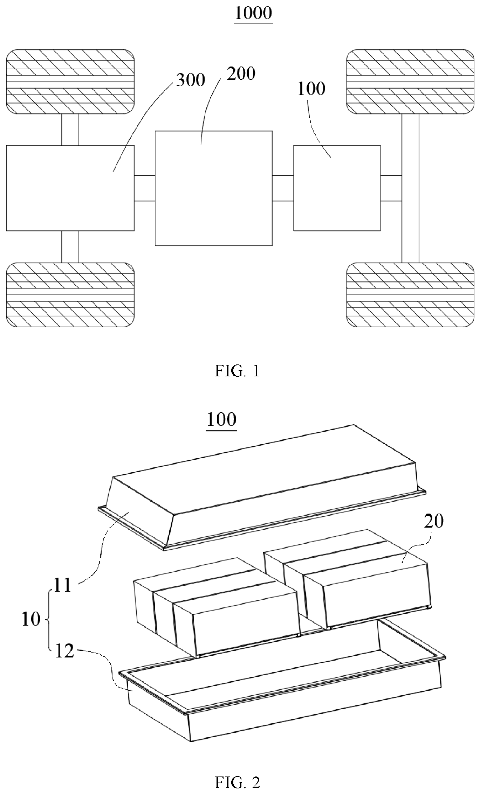

Referring to FIG. 1, FIG. 1 is a schematic diagram of a vehicle according to a first embodiment of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be used to supply power to the vehicle 1000. For example, the battery 100 may serve as an operation power source for the vehicle 1000 and is used in a circuit system of the vehicle 1000, for example, for operation power needed by the vehicle 1000 for start-up, navigation, and operation.

The vehicle 1000 may further include a controller 200 and a motor 300. The controller 200 is configured to control the battery 100 to supply power to the motor 300, for example, for operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of a battery according to a first embodiment of the present application. The battery 100 includes a case 10 and battery cells 20. The battery cells 20 are accommodated in the case 10. The case 10 is configured to provide an accommodating space for the battery cells 20, and the case 10 may be of a variety of structures. In some embodiments, the case 10 may include a first sub-case 11 and a second sub-case 12. The first sub-case 11 and the second sub-case 12 are lidded with each other. The first sub-case 11 and the second sub-case 12 jointly define the accommodating space for accommodating the battery cell 20. The second sub-case 12 may be of a hollow structure with one end open, and the first sub-case 11 may be of a plate structure. The open side of the second sub-case 12 is lidded with the first sub-case 11, such that the first sub-case 11 and the second sub-case 12 jointly define the accommodating space. The first sub-case 11 and the second sub-case 12 may also be of a hollow structure with one side open, and the open side of the second sub-case 12 is lidded with the open side of the first sub-case 11.

In the battery 100, there may be a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving an electrical connection among the plurality of battery cells 20.

The battery cell 20 may be a secondary battery or a primary battery; the battery cell 20 may also be a lithium-sulfur battery, a sodium-ion battery, or a magnesium-ion battery, but is not limited thereto.

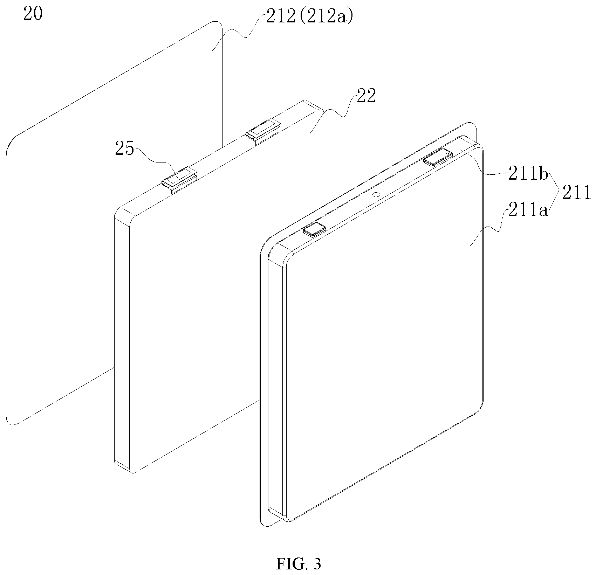

Referring to FIG. 3, FIG. 3 is an exploded view of a battery cell according to some embodiments of the present application. As shown in FIG. 3, the battery cell 20 includes a shell 21, an electrode assembly 22, and an electrode terminal 25. The shell 21 includes a shell body 211 and a cover plate 212. The shell body 211 is provided with an opening, and the cover plate 212 closes the opening to isolate the internal environment of the battery cell 20 from the external environment.

The shell body 211 is a component configured to form the internal environment of the battery cell 20 in combination with the cover plate 212. The formed internal environment may be used to accommodate the electrode assembly 22, electrolytic solution, and other components. The shell body 211 and the cover plate 212 may be separate components. The shell body 211 may be of various shapes and dimensions. Specifically, the shape of the shell body 211 may be determined according to the specific shape and dimension of the electrode assembly 22. The shell body 211 may be made of various materials, such as copper, iron, aluminum, stainless steel, aluminum alloy, and plastic.

The cover plate 212 is a component that is lidded onto the opening of the shell body 211 to isolate the internal environment of the battery cell 20 from the external environment. Without limitation, the shape of the cover plate 212 may be adapted to the shape of the shell body 211 to match the shell body 211. Optionally, the cover plate 212 may be made of a material with a certain hardness and strength (for example, aluminum alloy), such that the cover plate 212 is not easily deformed when being compressed or collided. This provides the battery cell 20 with higher structural strength and improved reliability. Functional components, such as electrode terminals, may be disposed on the cover plate 212. The electrode terminals may be configured to be electrically connected to the electrode assembly 22 for outputting or inputting electric energy of the battery cell 20. The cover plate 212 may also be made of a variety of materials, such as copper, iron, aluminum, stainless steel, aluminum alloy, and plastic, which is not specifically limited in the embodiments of the present application. In some embodiments, an insulating structure may be further provided on the inner side of the cover plate 212, and the insulating structure may be configured to isolate an electrical connection component in the shell body 211 from the cover plate 212 to reduce the risk of a short circuit. Illustratively, the insulating structure may be made of plastic, rubber, or the like.

The electrode assembly 22 is a component where the electrochemical reaction occurs in the battery cell 20. One or more electrode assemblies 22 may be accommodated in the shell body 211. The electrode assembly 22 is mainly formed by winding or stacking a positive electrode plate and a negative electrode plate, and a separation film is usually disposed between the positive electrode plate and the negative electrode plate. The separation film is configured to separate the positive electrode plate from the negative electrode plate, to avoid an internal short circuit between the positive electrode plate and the negative electrode plate. The portions of the positive electrode plate and the negative electrode plate that contain active substances constitute the main body part of the electrode assembly, and the portions of the positive electrode plate and the negative electrode plate that do not contain active substances each constitute a tab. The positive electrode tab and the negative electrode tab may be located together at one end of the main body part or separately at two ends of the main body part. During the charging and discharging process of the battery, the positive electrode active substance and the negative electrode active substance react with the electrolytic solution, and the tabs are connected to the electrode terminals to form a current circuit.

In the existing technical solutions, a pressure relief score is disposed on the shell of the battery cell. The pressure relief score is generally disposed on a side surface of the shell in the thickness direction and does not penetrate through the shell in this thickness direction, such that the structural strength of the portion of the shell provided with the pressure relief score is relatively low. When thermal runaway occurs in the battery cell, the pressure inside the shell increases rapidly in a short time, causing the region where the pressure relief score is located to tear first.

However, since the existing pressure relief score lacks guiding functionality, the tearing range and tearing direction of a crack during the tearing process of the pressure relief score are uncontrollable. For example, when the pressure relief score is located in the central region of the side wall of the shell and thermal runaway occurs in the battery cell, the crack extends irregularly in a direction away from the central region, rather than being guided to a preset position. A plurality of cracks diverge away from the central region, thereby destroying most of the side wall region where the pressure relief score is located. Alternatively, when the pressure relief score is disposed in the corner region of the side wall of the shell and thermal runaway occurs in the battery cell, the crack may extend toward the central region of the side wall, thereby destroying most of the side wall region. Therefore, since the existing pressure relief score lacks guiding functionality, the crack causes a wide range of damage to the shell, affecting the recycling of the shell.

In addition, due to the uncontrollable tearing range and tearing direction of the crack, the high-pressure gas is discharged disorderly from the crack, which may cause damage to other battery cells.

Therefore, the present application provides a battery cell. After thermal runaway occurs in the battery, the tearing direction or tearing range of the pressure relief score on the battery cell is controllable, thereby achieving localized venting.

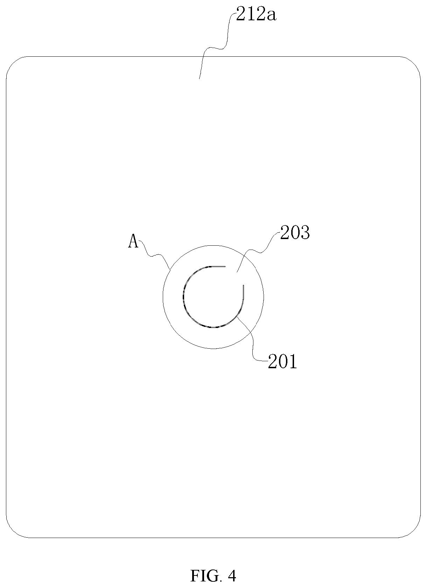

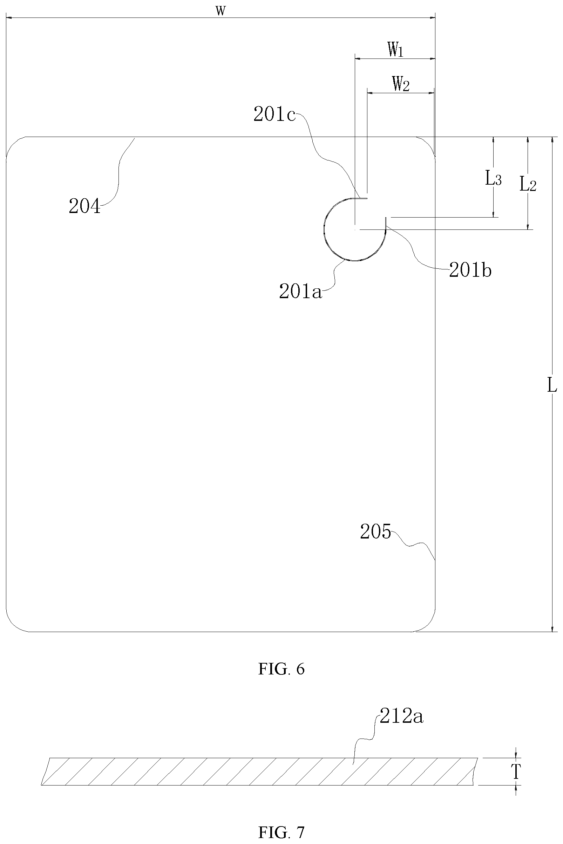

As shown in FIGs. 4 and 6, the battery cell 20 according to the embodiments of the present application may include a shell 21 and a pressure relief score 201.

The shell 21 can isolate the external environment from the internal environment of the battery cell 20. The shell 21 may be a metal piece, or certainly may be an insulating member.

The shell 21 can define an accommodating space, and an electrode assembly 22 and an electrolytic solution for wetting the electrode assembly may be accommodated in the accommodating space.

The shell 21 may include a first wall 212a, and the first wall 212a may be one of the walls of the shell 21. The specific position or specific function of the first wall 212a on the shell 21 is not limited in the present application. For example, the first wall 212a may be a wall of the shell 21 on which the electrode terminal is disposed; alternatively, the shell 21 may be of a flat structure, and the first wall 212a is a wall of the shell 21 in the thickness direction.

The pressure relief score 201 is disposed on the first wall 212a, and the pressure relief score 201 is generally disposed on a side surface of the first wall 212a in the thickness direction. For example, the pressure relief score 201 may be disposed on the inner side surface and/or the outer side surface of the first wall 212a.

The pressure relief score 201 may be formed on the first wall 212a by laser etching, and the pressure relief score 201 does not penetrate through the first wall 212a in the thickness direction of the first wall 212a.

The portion of the first wall provided with the pressure relief score 201 has a lower structural strength than other portions. Therefore, after thermal runaway occurs in the battery cell 20, the pressure relief score tears first, thereby quickly releasing the high-pressure gas inside the shell 21.

The pressure relief score 201 is generally of a groove structure, and the cross-sectional shape of the pressure relief score 201 may be semicircular, trapezoidal, or other shapes. The specific cross-sectional shape of the pressure relief score 201 is not limited in the present application.

The pressure relief score 201 includes a circular arc segment 201a. As the name implies, the circular arc segment 201a is not a complete circle, but an arc line segment corresponding to the central angle of a circle. The central angle and radius of the circular arc segment 201a may be adjusted as required.

The circular arc segment 201a is provided with a first end, and the first end may be one end of the circular arc segment 201a in the length direction.

The circular arc segment 201a may be further provided with a second end, and the second end may be the other end of the circular arc segment 201a in the length direction.

The pressure relief score 201 further includes a first extension segment 201b, and the first extension segment 201b may be a straight line segment, an arc line segment, or another specially shaped line segment (e.g., a serpentine shape). The specific type of the first extension segment 201b is not limited herein.

The first extension segment 201b may be connected to the first end, and the first extension segment 201b may extend from the first end toward the direction close to the central axis 202 of the circular arc segment 201a.

It should be noted that the central axis 202 of the circular arc segment 201a can divide the circular arc segment 201a into two sub-circular arc segments, and the two sub-circular arc segments are symmetrical about the central axis 202 of the circular arc segment 201a.

Therefore, the extension line of the first extension segment 201b extending in a direction away from the circular arc segment 201a finally intersects with the central axis 202 of the circular arc segment 201a.

The pressure relief score 201 may further include a second extension segment 201c, and the second extension segment 201c may be a straight line segment, an arc line segment, or another specially shaped line segment (e.g., a serpentine shape). The specific type of the second extension segment 201c is not limited herein.

The second extension segment 201c may be connected to the second end, and the second extension segment 201c may extend from the second end toward the direction close to the central axis 202 of the circular arc segment 201a.

Therefore, the extension line of the second extension segment 201c extending in a direction away from the circular arc segment 201a finally intersects with the central axis 202 of the circular arc segment 201a.

The first extension segment 201b and the second extension segment 201c may also be symmetrical about the central axis 202 of the circular arc segment 201a. Certainly, the first extension segment 201b and the second extension segment 201c may also be asymmetrical about the central axis 202 of the circular arc segment 201a, provided that it is ensured that the first extension segment 201b extends from the first end toward the direction close to the central axis 202 of the circular arc segment 201a, and the second extension segment 201c extends from the second end toward the direction close to the central axis 202 of the circular arc segment 201a.

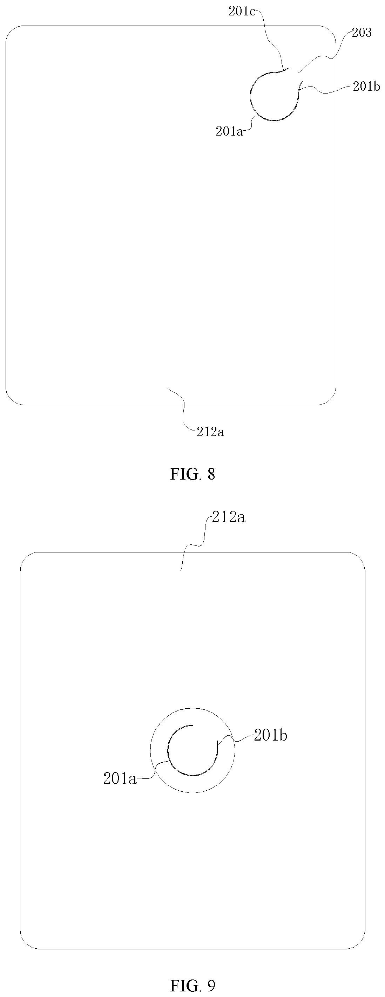

In the battery cell according to the embodiments of the present application, as shown in FIG. 9, the pressure relief score may include a circular arc segment 201a and a first extension segment 201b. By extending the first extension segment 201b from the first end toward the direction close to the central axis 202 of the circular arc segment, the circular arc segment 201a can reduce the stress concentration of the pressure relief score 201 during processing. When thermal runaway occurs in the battery cell 20 and the internal high-pressure gas tears the pressure relief score 201, the first extension segment 201b can guide the crack to approach the direction close to the central axis 202 of the circular arc segment 201a, thereby enabling the size of the torn portion on the shell 21 to be controllable. Certainly, the first extension segment 201b also enables the tearing direction of the crack to be controllable. Therefore, after thermal runaway occurs in the battery cell 20 and the pressure relief score 201 is torn, localized venting can be achieved to reduce the probability of large-scale tearing of the shell 21, and both the tearing direction and the tearing range of the crack are controllable, thereby reducing the damage to the battery cell 20 caused by uncontrollable cracks.

In the battery cell 20 according to the embodiments of the present application, the pressure relief score 201 includes a circular arc segment 201a, a first extension segment 201b, and a second extension segment 201c. By extending the first extension segment 201b from the first end toward the direction close to the central axis 202 of the circular arc segment 201a and extending the second extension segment 201c from the second end toward the direction close to the central axis 202 of the circular arc segment 201a, the circular arc segment 201a can reduce the stress concentration of the pressure relief score 201 during processing. When thermal runaway occurs in the battery cell 20 and the internal high-pressure gas tears the pressure relief score 201, the first extension segment 201b and the second extension segment 201c can guide the crack to approach the direction close to the central axis 202 of the circular arc segment 201a, such that the first extension segment 201b and the second extension segment 201c can guide the crack on the shell 21 to gradually converge, thereby enabling the size of the torn portion on the shell 21 to be controllable. Certainly, the first extension segment 201b and the second extension segment 201c also enable the tearing direction of the crack to be controllable. Therefore, after thermal runaway occurs in the battery cell 20 and the pressure relief score 201 is torn, localized venting can be achieved to reduce the probability of large-scale tearing of the shell 21, and both the tearing direction and the tearing range of the crack are controllable, thereby reducing the damage to the battery cell 20 caused by uncontrollable cracks, and also reducing the impact on other battery cells 20 caused by the disordered discharge of high-pressure gas due to uncontrollable cracks.

According to some embodiments of the present application, the first extension segment 201b and the second extension segment 201c are symmetrical about the central axis 202. For example, the extension length of the first extension segment 201b is the same as the extension length of the second extension segment 201c. If both the first extension segment 201b and the second extension segment 201c are straight lines, the angle between the extension line of the first extension segment 201b and the central axis 202 is the same as the angle between the extension line of the second extension segment 201c and the central axis 202. Therefore, the tearing directions and the tearing ranges of the cracks guided by the first extension segment 201b and the second extension segment 201c can remain substantially consistent, thereby reducing the probability of uncontrollable cracks and further achieving stable localized venting of the shell 21.

According to some embodiments of the present application, the length of the first extension segment 201b is the same as the length of the second extension segment 201c. It should be noted that both the first extension segment 201b and the second extension segment 201c may be straight line segments; alternatively, both the first extension segment 201b and the second extension segment 201c may be arc line segments; alternatively, one of the first extension segment 201b and the second extension segment 201c is an arc line segment, while the other is a straight line segment. As long as the length of the first extension segment 201b is the same as the length of the second extension segment 201c, it falls within the protection scope of the present application.

Therefore, the venting area of the crack at the first extension segment 201b is approximately the same as the venting area of the crack at the second extension segment 201c, and the subsequent venting area of the shell 21 after the crack is guided by the first extension segment 201b is also approximately the same as the subsequent venting area of the shell 21 after the crack is guided by the second extension segment 201c, thereby ensuring the stability of the tearing range of the crack and reducing the probability of uncontrollable cracks.

According to some embodiments of the present application, both the first extension segment 201b and the second extension segment 201c are straight line segments, and the included angle between the extension line of the first extension segment 201b and the central axis 202 is the same as the included angle between the extension line of the second extension segment 201c and the central axis 202. Therefore, the crack guided by the first extension segment 201b and the crack guided by the second extension segment 201c may intersect on the central axis 202, thereby achieving localized venting of the shell 21.

According to some embodiments of the present application, the length of the first extension segment 201b is less than the length of the second extension segment 201c. After being guided by the first extension segment 201b, the crack continues to tear the shell 21. Similarly, after being guided by the second extension segment 201c, the crack continues to tear the shell 21. Since the length of one extension segment 201b is less than the length of the second extension segment 201c, in the case that the two cracks are not guided by the first extension segment 201b and the second extension segment 201c, the subsequent venting area of the shell 21 after the crack is guided by the first extension segment 201b is larger than the subsequent venting area of the shell 21 after the crack is guided by the second extension segment 201c, such that the high-pressure gas inside the shell 21 can be quickly discharged after thermal runaway occurs in the battery cell 20.

According to some embodiments of the present application, both the first extension segment 201b and the second extension segment 201c are straight line segments, and the included angle between the extension line of the first extension segment 201b and the central axis 202 is different from the included angle between the extension line of the second extension segment 201c and the central axis 202. Therefore, the subsequent venting area of the shell 21 after the crack is guided by the first extension segment 201b is different from the subsequent venting area of the shell 21 after the crack is guided by the second extension segment 201c. At least one of the subsequent venting area of the shell 21 after the crack is guided by the first extension segment 201b and the subsequent venting area of the shell 21 after the crack is guided by the second extension segment 201c is large, such that the high-pressure gas inside the shell 21 can be quickly discharged after thermal runaway occurs in the battery cell 20.

In some embodiments of the present application, as shown in FIG. 4, the central angle of the circular arc segment 201a is α, satisfying 180° ≤ α < 360°. For example, the central angle may be 180°, 200°, 220°, 240°, 260°, 280°, 300°, 320°, 340°, or 350°.

The specific value of the central angle of the circular arc segment 201a is not limited in the present application, provided that it is ensured that the central angle of the circular arc segment 201a falls within the above range.

When α ≥ 180°, the area enclosed by the circular arc segment 201a is sufficient, such that when thermal runaway occurs in the battery cell 20, the crack tears the shell 21 along the circular arc segment 201a, and the crack on the circular arc segment 201a can quickly discharge the high-pressure gas inside the shell 21; when α < 360°, the pressure relief score 201 is of an unclosed annular structure, and the pressure relief score 201 is provided with an opening, such that the crack can tear the shell along the orientation of the opening, enabling the tearing direction and the tearing range of the crack to be controllable, thereby achieving localized venting of the crack on the shell 21. When 180° ≤ α < 360°, the crack torn along the circular arc segment 201a can cover a sufficient range, allowing the high-pressure gas inside the shell 21 to be quickly discharged. Meanwhile, the pressure relief score 201 is provided with an opening, such that the tearing direction and the tearing range of the crack can be guided, thereby achieving localized venting of the crack on the shell 21.

Since the central angle of the circular arc segment 201a falls within the above range, the pressure relief score 201 has a sufficient range, allowing the pressure relief score to be opened when the pressure inside the shell 21 meets the preset condition, and meanwhile, the situation where the crack extends irregularly after the circular pressure relief score 201 is torn can also be avoided.

In addition, the tangent lines at both ends of the circular arc segment 201a in the length direction may also be parallel or intersecting, such that the circular arc segment 201a itself can also guide the crack at the first end and the crack at the second end to extend toward each other, and the extension directions of the cracks on both sides are in a converged state, thereby enabling the tearing direction and the tearing range of the cracks to be controllable.

In some embodiments of the present application, 210° ≤ α ≤ 330°. For example, the central angle α of the circular arc segment 201a may be 210°, 240°, 245°, 250°, 255°, 260°, 265°, 270°, 275°, 280°, 285°, 290°, 295°, 300°, or 330°.

When α ≥ 210°, the area enclosed by the circular arc segment 201a is further increased, such that when thermal runaway occurs in the battery cell 20, the crack tears the shell 21 along the circular arc segment 201a, and the tearing range of the crack enables the high-pressure gas inside the shell 21 to be discharged more quickly; when α ≤ 330°, the pressure relief score 201 is of an unclosed annular structure, and the pressure relief score 201 is provided with an opening having a larger opening range, such that the crack can tear the shell along the orientation of the opening. This not only enables the tearing direction and the tearing range of the crack to be controllable, but also increases the tearing range of the crack, thereby enabling faster discharge of the high-pressure gas inside the shell 21. When 210° ≤ α ≤ 330°, the discharge speed of the high-pressure gas inside the shell 21 can be further increased. Meanwhile, the size of the opening on the circular arc segment 201a is larger, thereby guiding the crack to tear the shell 21 over a larger range. Therefore, the opening can not only guide the tearing direction and the tearing range of the crack, but also further increase the discharge speed of the high-pressure gas inside the shell 21.

Since the central angle of the circular arc segment 201a falls within the above range, the pressure relief score 201 has a sufficient range, allowing the pressure relief score to be opened when the pressure inside the shell 21 meets the preset condition. Meanwhile, the tangent lines at both ends of the circular arc segment 201a in the length direction may also be intersecting, such that the circular arc segment 201a itself can also guide the crack at the first end and the crack at the second end to extend toward each other, and the extension directions of the cracks on both sides are in a converged state, thereby enabling the extension direction and the tearing range of the cracks to be controllable.

In some embodiments of the present application, the first extension segment 201b may be tangent to the circular arc segment 201a. That is, the first extension segment 201b coincides with the tangent line of the first end. Therefore, the crack on the circular arc segment 201a can extend and tear very smoothly along the tangent line at the first end of the circular arc segment 201a, thereby reducing the impediment to the tearing process of the crack, enabling the tearing of the crack to be smoother and more controllable, and reducing the stress concentration during the tearing process.

It can be understood that the first extension segment 201b may be an arc line segment or a straight line segment. The line segment type of the first extension segment 201b is not limited in the present application, provided that it is ensured that the first extension segment 201b is tangent to the circular arc segment 201a.

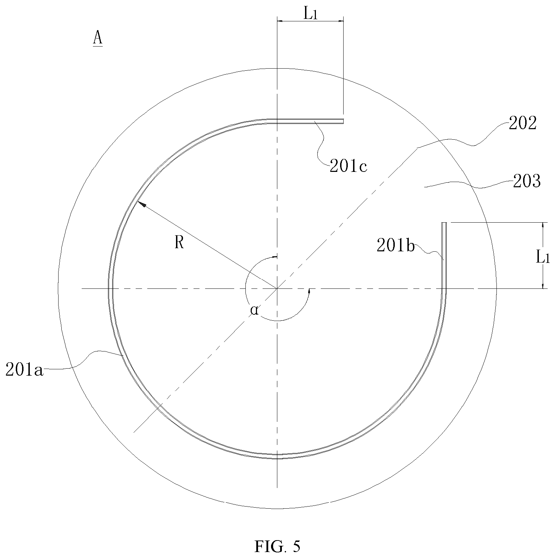

In some embodiments of the present application, as shown in FIG. 5, the second extension segment 201c may be tangent to the circular arc segment 201a. That is, the second extension segment 201c coincides with the tangent line of the second end. Therefore, the crack on the circular arc segment 201a can extend and tear very smoothly along the tangent line at the second end of the circular arc segment 201a, thereby reducing the impediment to the tearing process of the crack, enabling the tearing of the crack to be smoother and more controllable, and reducing the stress concentration during the tearing process.

It can be understood that the second extension segment 201c may be an arc line segment or a straight line segment. The line segment type of the second extension segment 201c is not limited in the present application, provided that it is ensured that the second extension segment 201c is tangent to the circular arc segment 201a.

As shown in FIG. 8, the first extension segment 201b is an arc line segment, and the first extension segment 201b may be tangent to the circular arc segment 201a; the second extension segment 201c is an arc line segment, and the second extension segment 201c may be tangent to the circular arc segment 201a.

According to some embodiments of the present application, as shown in FIG. 5, the first extension segment 201b is a straight line segment. Configuring the first extension segment 201b as a straight line segment, in one aspect, makes the processing of the first extension segment 201b easier, and in another aspect, allows the tearing process of the crack on the straight line segment to be smoother. In other words, the straight line segment can better guide the crack to tear along a preset direction, thereby enabling the tearing direction and the tearing range of the crack to be more controllable.

According to some embodiments of the present application, the second extension segment 201c is a straight line segment. Configuring the second extension segment 201c as a straight line segment, in one aspect, makes the processing of the second extension segment 201c easier, and in another aspect, allows the tearing process of the crack on the straight line segment to be smoother. In other words, the straight line segment can better guide the crack to tear along the preset direction, thereby enabling the tearing direction and the tearing range of the crack to be more controllable.

In some embodiments of the present application, as shown in FIG. 4, the radius of the circular arc segment 201a is R, satisfying 1 mm ≤ R ≤ 20 mm.

For example, the radius of the circular arc segment 201a may be 1 mm, 3 mm, 5 mm, 7 mm, 9 mm, 11 mm, 13 mm, 15 mm, 17 mm, 19 mm, or 20 mm.

The specific value of the radius of the circular arc segment 201a is not limited in the present application. As long as the radius of the circular arc segment 201a falls within the above range, it falls within the protection scope of the present application.

When R ≥ 1 mm, after the crack tears along the circular arc segment 201, the pressure relief requirement of the battery cell 20 during thermal runaway can be met; when R ≤ 20 mm, the range of the circular arc segment 201 is not too large, such that the overall structural strength of the shell 21 meets the requirements. When 1 mm ≤ R ≤ 20 mm, it can not only meet the pressure relief requirement of the battery cell 20 during thermal runaway, but also make the range of the pressure relief score 201 not too large, such that the overall structural strength of the shell 21 meets the requirements.

In some embodiments of the present application, as shown in FIG. 4, the length of the straight line segment is L1, satisfying 0 < L1 ≤ 20 mm. For example, the length of the straight line segment may be 1 mm, 3 mm, 5 mm, 7 mm, 9 mm, 11 mm, 13 mm, 15 mm, 17 mm, 19 mm, or 20 mm.

It should be noted that the length of the straight line segment refers to the length of the first extension segment 201b when the first extension segment is configured as a straight line, or the length of the second extension segment 201c when the second extension segment is a straight line.

The length of the straight line segment is not limited in the present application. As long as the radius of the straight line segment falls within the above range, it falls within the protection scope of the present application.

When L1 > 0, after the crack tears along the straight line segment, the pressure relief requirement of the battery cell 20 during thermal runaway can be met; when L1 ≤ 20 mm, the range of the straight line segment is not too large, such that the overall structural strength of the shell 21 meets the requirements. When 0 < L1 ≤ 20 mm, it can not only meet the pressure relief requirement of the battery cell 20 during thermal runaway, but also make the range of the pressure relief score 201 not too large to affect the overall structural strength of the shell 21.

According to some embodiments of the present application, 3 mm ≤ R ≤ 10 mm, and 1 mm ≤ L1 ≤ 10 mm.

For example, the radius of the circular arc segment 201a may be 3 mm, 4 mm, 5 mm, 6 mm, 7 mm, 8 mm, 9 mm, or 10 mm.

The specific value of the radius of the circular arc segment 201a is not limited in the present application. As long as the radius of the circular arc segment 201a falls within the above range, it falls within the protection scope of the present application.

When R ≥ 3 mm, after the crack tears along the circular arc segment 201, the pressure relief requirement of the battery cell 20 during thermal runaway can be further met; when R ≤ 10 mm, the range of the circular arc segment 201 is not too large, such that the overall structural strength of the shell 21 can further meet the requirements. When 3 mm ≤ R ≤ 10 mm, it can not only further meet the pressure relief requirement of the battery cell 20 during thermal runaway, but also make the range of the pressure relief score 201 not too large, such that the overall structural strength of the shell 21 can further meet the requirements.

For example, the length of the straight line segment may be 1 mm, 2 mm, 3 mm, 4 mm, 5 mm, 6 mm, 7 mm, 8 mm, 9 mm, or 10 mm.

It should be noted that the length of the straight line segment refers to the length of the first extension segment 201b when the first extension segment is configured as a straight line, or the length of the second extension segment 201c when the second extension segment is a straight line.

The length of the straight line segment is not limited in the present application. As long as the radius of the straight line segment falls within the above range, it falls within the protection scope of the present application.

When L1 ≥ 1 mm, after the crack tears along the straight line segment, the pressure relief requirement of the battery cell 20 during thermal runaway can be further met; when L1 ≤ 10 mm, the range of the straight line segment is not too large, such that the overall structural strength of the shell 21 further meets the requirements. When 1 mm ≤ L1 ≤ 20 mm, it can not only further meet the pressure relief requirement of the battery cell 20 during thermal runaway, but also make the range of the pressure relief score 201 not too large, such that the overall structural strength of the shell 21 can further meet the requirements.

In some embodiments of the present application, 0 < L1/R ≤ 2. For example, L1/R may be 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0.

The specific value of L1/R is not limited in the present application. As long as L1/R falls within the above range, it falls within the protection scope of the present application.

L1/R represents the degree of extension of the straight line segment relative to the radius of the arc line segment. A larger L1/R indicates greater extension of the straight line segment relative to the radius of the arc line segment, while a smaller L1/R indicates less extension of the straight line segment relative to the radius of the arc line segment.

When L1/R > 0, the straight line segment can extend from an end of the arc line segment, and the straight line segment can guide the crack to tear the shell 21; after the crack tears along the straight line segment, the pressure relief requirement of the battery cell 20 during thermal runaway can be met; when L1/R ≤ 2, the length of the straight line segment is not too great, such that the range of the pressure relief score 201 is controlled, and the overall structural strength of the shell 21 meets the requirements. When 0 < L1/R ≤ 0.6, it can not only ensure that the straight line segment has a sufficient length to guide the tearing direction and the tearing range of the crack, but also mitigate the excessive negative impact on the structural strength of the shell 21 caused by an excessive range of the pressure relief score 201 resulting from the overextension of the straight line segment.

In some embodiments of the present application, 0.1 ≤ L1/R ≤ 1. For example, L1/R may be 0.05, 0.1, 0.15, 0.2, 0.25, 0.3, 0.35, 0.4, 0.45, 0.5, 0.55, 0.6, 0.7, 0.8, 0.9, or 1.0.

When L1/R ≥ 0.1, the straight line segment can extend from an end of the arc line segment, and the straight line segment can guide the crack to tear the shell 21; after the crack tears along the straight line segment, the pressure relief requirement of the battery cell 20 during thermal runaway can be further met; when L1/R ≤ 1, the length of the straight line segment is not too great, such that the range of the pressure relief score 201 is controlled, and the overall structural strength of the shell 21 further meets the requirements. When 0 < L1/R ≤ 0.6, it can not only ensure that the straight line segment has a sufficient length to guide the tearing direction and the tearing range of the crack, but also further mitigate the excessive negative impact on the structural strength of the shell 21 caused by an excessive range of the pressure relief score 201 resulting from the overextension of the straight line segment.

In some embodiments of the present application, as shown in FIGs. 4 and 5, an end of the first extension segment 201b distal to the circular arc segment 201a is spaced apart from an end of the second extension segment 201c distal to the circular arc segment 201a to form an opening 203. That is, the end of the first extension segment 201b distal to the circular arc segment 201a and the end of the second extension segment 201c distal to the circular arc segment 201a are not connected to each other, thereby ensuring that the pressure relief score 201 is in an unclosed state.

Generally, the orientation of the opening 203 directly affects the tearing direction of the crack. For example, if the opening 203 faces toward the corner of the first wall 212a, the high-pressure gas tears the pressure relief score 201 after thermal runaway of the battery cell 20, and the crack can tear along the opening 203 toward the corner, such that the orientation of the opening 203 can be adjusted to adjust the tearing direction of the crack.

In some embodiments of the present application, as shown in FIG. 3, the shell 21 is flat, and the first wall 212a is a wall of the shell 21 in the thickness direction. That is, the pressure relief score 201 in the embodiments of the present application is not disposed on a small surface, but instead on a large surface of the shell 21. Thus, the pressure relief score 201 is not constrained by the size of the small surface, and the pressure relief score 201 can be designed with an appropriate size as required. In addition, disposing the pressure relief score 201 on the large surface can further reduce the processing difficulty of the pressure relief score 201, such that the manufacturing cost of the pressure relief score 201 is reduced.

In some embodiments of the present application, as shown in FIG. 6, the pressure relief score 201 is disposed in a corner region of the first wall 212a. By disposing the pressure relief score 201 in the corner region of the first wall 212a, when thermal runaway occurs in the battery cell 20, the crack can tear the shell 21 under the guidance of the pressure relief score 201. Since the pressure relief score 201 is disposed in the corner region of the first wall 212a, the tearing region of the crack is also mainly concentrated in the corner region of the first wall 212a. Thus, the probability of crack-induced damage to other regions of the first wall 212a can be reduced, thereby making it possible to recycle the shell 21 after thermal runaway occurs in the battery cell 20.

In some embodiments of the present application, the opening 203 of the pressure relief score 201 faces toward the corner of the first wall 212a. Therefore, when the crack tears the shell 21 along the pressure relief score 201, the crack can tear along the orientation of the opening 203, and the tearing direction of the crack faces toward the corner of the first wall 212a, thereby reducing the probability of the crack moving toward the middle region of the first wall 212a, and reducing the probability of complete tearing of the first wall 212a, such that the shell 21 can be recycled.

According to some embodiments of the present application, as shown in FIG. 6, the first wall 212a includes a first edge 204 and a second edge 205. The first edge 204 and the second edge 205 intersect to form a corner of the first wall 212a.

The shortest distance between the center of the pressure relief score 201 and the first edge 204 is L2, and the length of the second edge 205 is L, satisfying 0 < L2 < L/2.

The shortest distance between the center of the pressure relief score 201 and the second edge 205 is W1, and the length of the first edge 204 is W, satisfying 0 < W1 < W/2.

Therefore, the center of the pressure relief score 201 is proximal to the corner defined by the first edge 204 and the second edge 205. Thus, the tearing region of the crack is also mainly concentrated in the corner region of the first wall 212a, such that the probability of crack-induced damage to other regions of the first wall 212a can be reduced, thereby making it possible to recycle the shell 21 after thermal runaway occurs in the battery cell 20.

In some embodiments of the present application, as shown in FIG. 6, the shortest distance between the end of the first extension segment 201b distal to the circular arc segment 201a and the first edge 204 is L3, and the length of the second edge 205 is L, satisfying 0 < L3 < L/2; the shortest distance between the end of the second extension segment 201c distal to the circular arc segment 201a and the second edge 205 is W2, and the length of the first edge 204 is W, satisfying 0 < W2 < W/2.

The end of the first extension segment 201b distal to the circular arc segment 201a is spaced apart from the end of the second extension segment 201c distal to the circular arc segment 201a to form the opening 203. Since the shortest distance between the end of the first extension segment 201b distal to the circular arc segment 201a and the first edge 204 and the length of the second edge 205 meet the above conditions, and the shortest distance between the end of the second extension segment 201 c distal to the circular arc segment 201a and the second edge 205 and the length of the first edge 204 meet the above conditions, the opening 203 faces toward the corner defined by the first edge 204 and the second edge 205.

Therefore, when the crack tears the shell 21 along the pressure relief score 201, the crack can tear along the orientation of the opening 203, that is, the tearing direction of the crack faces toward the corner of the first wall 212a, thereby reducing the probability of the crack moving toward the middle region of the first wall 212a, and reducing the probability of complete tearing of the first wall 212a, such that the shell 21 can be recycled.

In the related art, the pressure relief score is configured as an annular shape and is located in the central region of the first wall. Since the pressure relief score is not provided with an opening, when thermal runaway occurs in the battery cell, the crack is not guided to the preset position, but instead extends irregularly in the direction away from the central region. The plurality of cracks diverge away from the central region, destroying most of the region of the first wall.

In some embodiments of the present application, as shown in FIG. 4, the pressure relief score 201 is disposed in the central region of the first wall 212a. It can be understood that the center of the pressure relief score 201 may be disposed in the central region of the first wall 212a; alternatively, the region enclosed by the pressure relief score 201 may be located in the central region of the first wall 212a.

The pressure relief score 201 is disposed in the central region of the first wall 212a. Meanwhile, since the pressure relief score 201 is provided with the opening 203, when thermal runaway occurs in the battery cell 20, the crack extends along the pressure relief score 201 and along the region toward which the opening 203 is oriented. Thus, the crack does not tear irregularly and does not damage most of the region of the first wall 212a, but instead can be guided to a preset region.

In some embodiments of the present application, as shown in FIG. 7, the thickness of the first wall 212a is T, satisfying 0.03 mm ≤ T ≤ 0.6 mm. For example, the thickness of the first wall 212a provided with the pressure relief score 201 may be 0.03 mm, 0.05 mm, 0.1 mm, 0.15 mm, 0.2 mm, 0.25 mm, 0.3 mm, 0.35 mm, 0.4 mm, 0.45 mm, 0.5 mm, 0.55 mm, or 0.6 mm. The specific value of the thickness of the first wall 212a is not limited in the present application. As long as the thickness of the first wall 212a falls within the above range, it falls within the protection scope of the present application.

When T ≥ 0.03 mm, it can be ensured that the first wall 212a has sufficient structural strength to facilitate subsequent laser etching of the pressure relief score 201 thereon; when T ≤ 0.6 mm, the first wall 212a is enabled to be thin enough to improve the energy density of the battery cell 20 in the thickness direction of the first wall 212a. When 0.03 mm ≤ T ≤ 0.6 mm, it can not only ensure that the thickness of the first wall 212a is thin enough to improve the energy density of the battery cell 20 in the thickness direction of the first wall 212a, but also enable the first wall 212a to have sufficient structural strength to facilitate subsequent laser etching of the pressure relief score 201 thereon.

In some embodiments of the present application, as shown in FIG. 7, the first wall 212a is provided with a pressure relief score 201, and the thickness of the first wall 212a is T, satisfying 0.05 mm ≤ T ≤ 0.2 mm. For example, the thickness of the first wall 212a provided with the pressure relief score 201 may be 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, or 0.2 mm. The specific value of the thickness of the first wall 212a is not limited in the present application. As long as the thickness of the first wall 212a falls within the above range, it falls within the protection scope of the present application.

When T ≥ 0.05 mm, it can be further ensured that the first wall 212a has sufficient structural strength to facilitate subsequent laser etching of the pressure relief score 201 thereon; when T ≤ 0.2 mm, the first wall 212a is enabled to be thin enough to further improve the energy density of the battery cell 20 in the thickness direction of the first wall 212a. When 0.03 mm ≤ T ≤ 0.6 mm, it can not only ensure that the thickness of the first wall 212a is thin enough to further improve the energy density of the battery cell 20 in the thickness direction of the first wall 212a, but also enable the first wall 212a to further have sufficient structural strength to facilitate subsequent laser etching of the pressure relief score 201 thereon.

In some embodiments of the present application, the shell 21 includes a shell body 211 and a cover plate 212. The shell body 211 includes a bottom wall 211a and a peripheral side wall 211b. One end of the peripheral side wall 211b is connected to the outer peripheral edge of the bottom wall 211a, the other end of the peripheral side wall 211b forms a first opening in an enclosing manner, and the cover plate 212 closes the first opening, where the first wall 212a is the cover plate 212 or the bottom wall 211a.

That is, the shell 21 is formed by two separate components, i.e., the shell body 211 and the cover plate 212. The shell body 211 and the cover plate 212 may be metal pieces, and the two may be fixed together by welding. The first wall 212a is the cover plate 212 or the bottom wall 211a, so the pressure relief score 201 is disposed on the cover plate 212 or the bottom wall 211a. For example, if the battery cell 20 is flat, and the cover plate 212 and the bottom wall 211a are opposite to each other in the thickness direction, the pressure relief score 201 is disposed on the large surface of the shell 21.

In some embodiments of the present application, the shell 21 is made of stainless steel, and the pressure relief score 201 may be formed by laser etching. Certainly, the pressure relief score 201 may also be formed by stamping, and the forming method of the pressure relief score 201 is not limited in the present application.

In some embodiments of the present application, the shape of the cross section of the pressure relief score 201 may be a trapezoid. The longer side of the two parallel sides of the trapezoid is located at the opening 203 of the groove of the pressure relief score 201, the shorter side of the two parallel sides may have a length of 0.05 mm to 1.0 mm, and the bottom angle of the trapezoid (the angle between the bottom wall and the peripheral wall of the trapezoidal groove) may be 30° to 60°.

The trapezoidal cross section of the pressure relief score 201 provides better uniformity and small stress concentration. Certainly, the cross section of the pressure relief score 201 may also be triangular, circular arc-shaped, or rectangular.

The following briefly describes a battery according to the embodiments of the present application.

The battery according to the embodiments of the present application includes the battery cell 20 according to the above embodiments. Since the battery according to the embodiments of the present application is provided with the above battery cell 20, the pressure relief score 201 can be torn during thermal runaway of the battery cell 20, and the size and tearing direction of the torn part on the shell 21 are controllable, thereby achieving localized venting and reducing the probability of large-scale tearing of the shell 21.

The following briefly describes an electric device according to the embodiments of the present application.

The electric device according to the embodiments of the present application includes the above battery. Since the electric device according to the embodiments of the present application is provided with the above battery, the safety of the electric device is improved, thereby reducing the negative impact on the electric device when thermal runaway occurs in the battery cell 20.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
a shell, comprising a first wall;
a pressure relief score, disposed on the first wall, wherein the pressure relief score comprises a circular arc segment and a first extension segment; the circular arc segment is provided with a first end, and the first extension segment is connected to the first end and extends from the first end toward a direction close to a central axis of the circular arc segment.

2. The battery cell according to claim 1, wherein the pressure relief score further comprises a second extension segment, the circular arc segment is provided with a second end, and the second extension segment is connected to the second end and extends from the second end toward the direction close to the central axis.

3. The battery cell according to claim 2, wherein the first extension segment and the second extension segment are symmetrical about the central axis.

4. The battery cell according to claim 2 or 3, wherein a length of the first extension segment is the same as a length of the second extension segment.

5. The battery cell according to any one of claims 2 to 4, wherein both the first extension segment and the second extension segment are straight line segments, and an included angle between an extension line of the first extension segment and the central axis is the same as an included angle between an extension line of the second extension segment and the central axis.

6. The battery cell according to any one of claims 2 to 5, wherein the length of the first extension segment is less than the length of the second extension segment.

7. The battery cell according to any one of claims 2 to 6, wherein both the first extension segment and the second extension segment are straight line segments, and the included angle between the extension line of the first extension segment and the central axis is different from the included angle between the extension line of the second extension segment and the central axis.

8. The battery cell according to any one of claims 1 to 7, wherein a central angle of the circular arc segment is α, satisfying 180° ≤ α < 360°.

9. The battery cell according to claim 8, wherein 210° ≤ α ≤ 330°.

10. The battery cell according to any one of claims 1 to 9, wherein the first extension segment is tangent to the circular arc segment; and/or the second extension segment is tangent to the circular arc segment.

11. The battery cell according to any one of claims 1 to 10, wherein the first extension segment is a straight line segment; and/or the second extension segment is a straight line segment.

12. The battery cell according to claim 11, wherein a radius of the circular arc segment is R, satisfying 1 mm ≤ R ≤ 20 mm; and
a length of the straight line segment is L1, satisfying 0 < L1 ≤ 20 mm.

13. The battery cell according to claim 12, wherein 3 mm ≤ R ≤ 10 mm, and 1 mm ≤ L1 ≤ 10 mm.

14. The battery cell according to any one of claims 11 to 13, satisfying 0 < L1/R ≤ 2.

15. The battery cell according to claim 14, satisfying 0.1 ≤ L1/R ≤ 1.

16. The battery cell according to any one of claims 1 to 15, wherein an end of the first extension segment distal to the circular arc segment is spaced apart from an end of the second extension segment distal to the circular arc segment to form an opening.

17. The battery cell according to claim 16, wherein the shell is flat, and the first wall is a wall of the shell in a thickness direction.

18. The battery cell according to claim 17, wherein the pressure relief score is disposed in a corner region of the first wall and the opening faces toward a corner of the first wall.

19. The battery cell according to claim 17 or 18, wherein the first wall comprises a first edge and a second edge, and the first edge and the second edge intersect to form one corner of the first wall;
a shortest distance between a center of the pressure relief score and the first edge is L2, and a length of the second edge is L, satisfying 0 < L2 < L/2; and
a shortest distance between the center of the pressure relief score and the second edge is W1, and a length of the first edge is W, satisfying 0 < W1 < W/2.

20. The battery cell according to any one of claims 17 to 19, wherein a shortest distance between the end of the first extension segment distal to the circular arc segment and the first edge is L3, and the length of the second edge is L, satisfying 0 < L3 < L/2; and
a shortest distance between the end of the second extension segment distal to the circular arc segment and the second edge is W2, and the length of the first edge is W, satisfying 0 < W2 < W/2.

21. The battery cell according to any one of claims 17 to 20, wherein the pressure relief score is disposed in a central region of the first wall.

22. The battery cell according to any one of claims 1 to 21, wherein a wall thickness of the first wall is T, satisfying 0.03 mm ≤ T ≤ 0.6 mm.

23. The battery cell according to claim 22, wherein T satisfies 0.05 mm ≤ T ≤ 0.2 mm.

24. The battery cell according to any one of claims 1 to 23, wherein the shell comprises a shell body and a cover plate; the shell body comprises a bottom wall and a peripheral side wall, one end of the peripheral side wall is connected to an outer peripheral edge of the bottom wall, the other end of the peripheral side wall forms a first opening in an enclosing manner, and the cover plate closes the first opening, wherein the first wall is the cover plate or the bottom wall.

25. A battery, comprising the battery cell according to any one of claims 1 to 24.

26. An electric device, comprising the battery cell according to any one of claims 1 to 24 or the battery according to claim 25, wherein the battery cell or the battery is configured to provide electric energy.
